# EUROPEAN PATENT APPLICATION

(11) **EP 4 179 876 A1**
(43) Date of publication of application: **17.05.2023**
(21) Application number: 21208261.4
(22) Date of filing: 15.11.2021
(51) Int. Cl.: A23D 7/00

(54) **A PLANT-BASED SUBSTITUTE FOR ANIMAL AND/OR DAIRY FAT**

(71) Applicant: Kerry Group Services International Limited, Tralee Co. Kerry (IE)
(72) Inventor: Doyle, Liam, Listowel (IE); O'Sullivan, Darren, Naas (IE); Horridge, Chris, Egham (GB); Titmus, Matthew, Burton-on-Trent (GB); Pisciotta, Antonella, Mozzo (IT); Naghshineh, Mahsa, Naas (IE); Curran, Erika, Naas (IE); Smyth, Deirdre, Naas (IE); O'Sullivan, Amy, Listowel (IE)
(74) Representative: FRKelly

(57) **Abstract**

The present invention relates to a plant-based substitute for animal and/or dairy fat comprising at least two vegetable oils and water, which does not have the adverse health consequences associated with the consumption of animal fat. The invention also relates to a process of preparing said substitute, its manufacturing process and to the use thereof in plant-based and meat-based food products.

## Description

### Field of the Invention

The present invention relates to a plant-based substitute for animal and/or dairy fat comprising at least two vegetable oils and water. Said substitute may also further comprise flavouring. The invention also relates to a process of preparing said substitute, its manufacturing process and to the use thereof in plant-based and meat-based food products.

### Background to the Invention

Fat is an important nutrient in food products influencing on product functionality, sensory attributes, and consumer acceptability. It is generally considered that excessive fat intake (e.g. animal or dairy) is hazardous for human health due to the increasing the risk of chronic disorder development such as coronary heart disease, diabetes, and obesity.

Furthermore, the undesirable health-related concerns surrounding trans-fat and saturated fat are well-recognised through many epidemiological studies. The World Health Organization (WHO) accordingly recommends that saturated fat should not provide more than 10% of total fat content.

Many manufacturers e.g. in the meat product industry, have made a concerted effort to reduce the saturated fat levels in their products. Several prior studies recommended substituting saturated fats (e.g. beef fat) with unsaturated oils. On the other hand, the sensory quality of meat-based products is highly dependent on their fat content. With excessive fat reduction, these products become dry with a hard or rubbery texture.

In recent years, plant-based vegetables oils or dairy-based fats have been used as the substitute for animal fats in recipes. Although these plant- and dairy-based oils have been suggested as the alternatives to animal fat, they do not add the succulence and fatty (beef/lard) flavour to a finished product similar to beef tallow or lard.

Saturated fat provides structure, texture, and stability to a finished product. The one-to-one replacement of saturated fatty acids with monounsaturated fatty acids is usually not feasible because this leads to undesirable textural and functionality in application changes (e.g. undesirable changes in product texture and fatty mouthfeel). Therefore, combining coconut oil, which has a high level of saturated fatty acids, with sunflower oil and more specifically high-oleic sunflower oil, which has a high level of monounsaturated fatty acids, unexpectedly provides a high level of the fat-related textural and mouthfeel attributes similar to the animal/dairy fat.

Furthermore, there is a consumer demand towards palm oil-free and dairy-free products (vegan). Thus, there is a need for a plant-based, vegan substitute for animal fat that, in application, delivers the same flavour, taste, succulence, and functionality as animal fat.

The present invention delivers the same flavour, taste, succulence, and functionality as animal/dairy fat but is based on vegetable fat having good nutritional qualities and it can be easily incorporated into multiple food products.

### Summary of the Invention

According to a first aspect of the present invention, there is provided a plant-based substitute for animal and/or dairy fat comprising:
(a) at least two fats; and
(b) water.

Optionally, the fat is a saturated fat.

Further optionally, the fat is saturated oil.

Alternatively, the fat is an unsaturated fat.

Further alternatively, the fat is an unsaturated oil.

Optionally, the fat is a monounsaturated fat.

Further optionally, the fat is a monounsaturated oil.

Alternatively, the fat is a polyunsaturated fat.

Further alternatively, the fat is polyunsaturated oil.

Optionally, the fat is a plant fat.

Further optionally, the fat is a vegetable fat.

Still further optionally, the fat is a seed fat.

Still further optionally, the fat is a fruit fat.

Still further optionally, the fat is a nut fat.

Still further optionally, the fat is drupe fat.

Optionally, the fat is an oil.

Optionally, the fat is a plant oil.

Further optionally, the fat is a vegetable oil.

Still further optionally, the fat is a seed oil.

Still further optionally, the fat is a fruit oil.

Still further optionally, the fat is a nut oil.

Still further optionally, the fat is a drupe oil.

Optionally, the fats are selected from any one of more of: coconut oil, corn oil, canola oil, cottonseed oil, sunflower oil high-oleic sunflower oil, olive oil, palm oil, peanut oil, rapeseed oil, safflower oil, sesame oil, soybean oil, and sunflower oil, or combinations each thereof.

Preferably, the plant-based substitute for animal and/or dairy fat is edible.

Further preferably, the plant-based substitute for animal and/or dairy fat is a food product component.

Optionally, there is provided a plant-based substitute for animal and/or dairy fat comprising:
(a) a first fat and a second fat; and
(b) water.

Optionally, there is provided a plant-based substitute for animal and/or dairy fat comprising:
(a) a first fat and a second fat; and
(b) water,
wherein the first fat and second fat are different fats.

Optionally, the first fat is coconut oil and the second fat is sunflower oil.

Optionally, there is provided a plant-based substitute for animal and/or dairy fat comprising:
(a) coconut oil and sunflower oil; and
(b) water.

Preferably, the sunflower oil is high-oleic sunflower oil.

Further preferably, there is provided a plant-based substitute for animal and/or dairy fat comprising:
(a) coconut oil and high-oleic sunflower oil; and
(b) water.

Optionally, the plant-based substitute for animal and/or dairy fat comprises 50-80%w/w coconut oil.

Optionally, the plant-based substitute for animal and/or dairy fat comprises 55-79%w/w coconut oil, optionally the plant-based substitute for animal and/or dairy fat comprises 60-78%w/w coconut oil, optionally the plant-based substitute for animal and/or dairy fat comprises 65-77%w/w coconut oil, optionally the plant-based substitute for animal and/or dairy fat comprises 70-77%w/w coconut oil.

Preferably, the plant-based substitute for animal and/or dairy fat comprises 76%w/w coconut oil.

Optionally, the plant-based substitute for animal and/or dairy fat comprises 2-25%w/w sunflower oil.

Further optionally, the plant-based substitute for animal and/or dairy fat comprises 7-23%w/w sunflower oil, optionally 12-21%w/w sunflower oil, optionally 17-19%w/w sunflower oil.

Preferably, the plant-based substitute for animal and/or dairy fat comprises 19%w/w sunflower oil.

Optionally, the plant-based substitute for animal and/or dairy fat comprises 2-25%w/w high-oleic sunflower oil.

Further optionally, the plant-based substitute for animal and/or dairy fat comprises 7-23%w/w high-oleic sunflower oil, optionally 12-21%w/w high-oleic sunflower oil, optionally 17-19%w/w high-oleic sunflower oil.

Preferably, the plant-based substitute for animal and/or dairy fat comprises 19%w/w high-oleic sunflower oil.

Optionally, the plant-based substitute for animal and/or dairy fat comprises 50-80%w/w coconut oil and 2-25%w/w sunflower oil.

Preferably, the plant-based substitute for animal and/or dairy fat comprises 50-80%w/w coconut oil and 2-25%w/w high-oleic sunflower oil.

Optionally, there is provided a plant-based substitute for animal and/or dairy fat comprising:
(a) 50%-80%w/w coconut oil and 2-25%w/w sunflower oil; and
(b) water.

Preferably, there is provided a plant-based substitute for animal and/or dairy fat comprising:
(a) 50-80%w/w coconut oil and 2-25%w/w high-oleic sunflower oil; and
(b) water.

Optionally, the plant-based substitute for animal and/or dairy fat comprises 3-10%w/w water.

Further optionally, the plant-based substitute for animal and/or dairy fat comprises 3.5-8.0%w/w water, optionally 4-6%w/w water.

Preferably, the plant-based substitute for animal and/or dairy fat comprises 5%w/w water.

Optionally, there is provided the plant-based substitute for animal and/or dairy fat comprising:
(a) 50-80%w/w coconut oil and 2-25%w/w sunflower oil; and
(b) 1-5%w/w water.

Preferably, there is provided the plant-based substitute for animal and/or dairy fat comprising:
(a) 50-80%w/w coconut oil and 2-25%w/w high-oleic sunflower oil; and
(b) 1-5%w/w water.

Optionally, there is provided the plant-based substitute for animal and/or dairy fat comprising:
(a) 76%w/w coconut oil and 19%w/w sunflower oil; and
(b) 5%w/w water.

Preferably, there is provided the plant-based substitute for animal and/or dairy fat comprising:
(a) 76%w/w coconut oil and 19%w/w high-oleic sunflower oil; and
(b) 5%w/w water.

Preferably, the plant-based substitute for animal and/or dairy fat is edible.

Further preferably, the plant-based substitute for animal and/or dairy fat is a food product component.

Optionally, the plant-based substitute for animal and/or dairy fat further comprises additional ingredients.

Optionally, the plant-based substitute for animal and/or dairy fat further comprises additional ingredients selected from any one of more of: colouring agents, preservatives, antioxidants, texture agents, sweeteners, flavouring, acidifiers, fibres, emulsifiers, starch; and mixtures thereof.

Preferably, the plant-based substitute for animal and/or dairy fat further comprises flavouring.

Optionally, the plant-based substitute for animal and/or dairy fat further comprises 1-5%w/w flavouring.

Further optionally, the plant-based substitute for animal and/or dairy fat further comprises 1.5-4.5%w/w flavouring, optionally 2-4%w/w flavouring, optionally 2.5-3.5%w/w flavouring.

Preferably, the plant-based substitute for animal and/or dairy fat further comprises 3%w/w flavouring.

Optionally, the plant-based substitute for animal and/or dairy fat further comprises flavouring, such as meat (e.g., beef, lard, chicken, lamb) or dairy flavours (e.g., cheese, butter, and cream) or vegetable flavours (e.g., tomato, mushrooms, and potato etc.)

Optionally, the plant-based substitute for animal and/or dairy fat further comprises flavouring such as yeast extract.

Optionally, the plant-based substitute for animal and/or dairy fat further comprises flavouring such as yeast extract, wherein the yeast extract naturally contains glutamic acid.

Optionally, the plant-based substitute for animal and/or dairy fat further comprises flavouring such as yeast extract, wherein the yeast extract naturally contains glutamic acid and derivatives thereof.

Optionally, the plant-based substitute for animal and/or dairy fat further comprises flavouring such as yeast extract, wherein the yeast extract naturally contains glutamic acid and derivatives thereof, and/or ribonucleotides.

Optionally, the plant-based substitute for animal and/or dairy fat further comprises flavouring such as yeast extract, wherein the yeast extract naturally contains glutamic acid and derivatives thereof, and/or ribonucleotides, which adds an umami flavour.

Optionally, the plant-based substitute for animal and/or dairy fat further comprises flavouring such as yeast extract, wherein the yeast extract naturally contains glutamic acid and derivatives thereof, and/or ribonucleotides, which adds an umami flavour and juiciness.

Optionally, the plant-based substitute for animal and/or dairy fat further comprises flavouring such as yeast extract, wherein the yeast extract naturally contains glutamic acid and derivatives thereof, which adds an umami flavour, juiciness and lingering taste.

Optionally, the plant-based substitute for animal and/or dairy fat further comprises flavouring, which is oil-soluble.

Optionally, the plant-based substitute for animal and/or dairy fat further comprises flavouring, which is water-soluble.

Optionally, the plant-based substitute for animal and/or dairy fat further comprises flavouring, which is water-soluble or oil-soluble.

Optionally, the plant-based substitute for animal and/or dairy fat further comprises flavouring, which is water-soluble and oil-soluble.

Optionally, there is provided a plant-based substitute for animal and/or dairy fat comprising:
(a) 50-80%w/w coconut oil 2-25%w/w sunflower oil;
(b) 3-10%w/w water; and
(c) flavouring.

Preferably, there is provided a plant-based substitute for animal and/or dairy fat comprising:
(a) 50-80%w/w coconut oil 2-25%w/w high-oleic sunflower oil;
(b) 3-10%w/w water; and
(c) flavouring.

Optionally, there is provided a plant-based substitute for animal and/or dairy fat comprising:
(a) 50-80%w/w coconut oil and of 2-25%w/w sunflower oil
(b) 3-10%w/w water; and
(c) 1-5%w/w flavouring.

Preferably, there is provided a plant-based substitute for animal and/or dairy fat comprising:
(a) 50-80%w/w coconut oil and of 2-25%w/w high-oleic sunflower oil
(b) 3-10%w/w water; and
(c) 1-5%w/w flavouring.

Optionally, there is provided a plant-based substitute for animal and/or dairy fat comprising:
(a) 50-80%w/w coconut oil and 2-25%w/w sunflower oil;
(b) 3-10%w/w water; and
(c) flavouring, such as meat, dairy or vegetable flavour.

Preferably, there is provided a plant-based substitute for animal and/or dairy fat comprising:
(a) 50-80%w/w coconut oil and 2-25%w/w high-oleic sunflower oil;
(b) 3-10%w/w water; and
(c) flavouring, such as meat, dairy or vegetable flavour.

Optionally, there is provided a plant-based substitute for animal and/or dairy fat comprising:
(a) 50-80%w/w coconut oil and 2-25%w/w sunflower oil;
(b) 3-10%w/w water; and
(c) 1-5%w/w flavouring, such meat, dairy or vegetable flavour.

Preferably, there is provided a plant-based substitute for animal and/or dairy fat comprising:
(a) 50-80%w/w coconut oil and 2-25%w/w high-oleic sunflower oil;
(b) 3-10%w/w water; and
(c) 1-5%w/w flavouring, such as meat, dairy or vegetable flavour.

Optionally, there is provided a plant-based substitute for animal and/or dairy fat comprising:
(a) 74%w/w coconut oil and 18%w/w sunflower oil;
(b) 5%w/w water; and
(c) 3%w/w flavouring, such meat, dairy or vegetable flavour.

Preferably, there is provided a plant-based substitute for animal and/or dairy fat comprising:
(a) 74%w/w coconut oil and 18%w/w high-oleic sunflower oil;
(b) 5%w/w water; and
(c) 3%w/w flavouring, such as meat, dairy or vegetable flavour.

Optionally, there is provided a plant-based substitute for animal and/or dairy fat comprising:
(a) 50-80%w/w coconut oil and 2-25%w/w sunflower oil;
(b) 3-10%w/w water; and
(c) yeast extract.

Optionally, there is provided a plant-based substitute for animal and/or dairy fat comprising:
(a) 50-80%w/w coconut oil and 2-25%w/w high-oleic sunflower oil;
(b) 3-10%w/w water; and
(c) yeast extract.

Optionally, there is provided a plant-based substitute for animal and/or dairy fat comprising:
(a) 50-80%w/w coconut oil and 2-25%w/w sunflower oil;
(b) 3-10%w/w water; and
(c) 1-5%w/w yeast extract.

Preferably, there is provided a plant-based substitute for animal and/or dairy fat comprising:
(a) 50-80%w/w coconut oil and 2-25%w/w high-oleic sunflower oil;
(b) 3-10%w/w water; and
(c) 1-5%w/w yeast extract.

Optionally, there is provided a plant-based substitute for animal and/or dairy fat comprising:
(a) 74%w/w coconut oil and 18%w/w sunflower oil;
(b) 5%w/w water; and
(c) 3%w/w yeast extract.

Preferably, there is provided a plant-based substitute for animal and/or dairy fat comprising:
(a) 74%w/w coconut oil and 18%w/w high-oleic sunflower oil;
(b) 5%w/w water; and
(c) 3%w/w yeast extract.

Optionally, there is provided a plant-based substitute for animal and/or dairy fat comprising:
(a) 50-80%w/w coconut oil and 2-25%w/w sunflower oil;
(b) 3-10%w/w water; and
(c) 1-5%w/w yeast extract;
wherein the yeast extract naturally contains glutamic acid and derivatives thereof, which adds an umami flavour, juiciness and lingering taste.

Optionally, there is provided a plant-based substitute for animal and/or dairy fat comprising:
(a) 74%w/w coconut oil and 18%w/w sunflower oil;
(b) 5%w/w water; and
(c) 3%w/w yeast extract;
wherein the yeast extract naturally contains glutamic acid and derivatives thereof, which adds an umami flavour, juiciness and lingering taste.

Preferably, there is provided a plant-based substitute for animal and/or dairy fat comprising:
(a) 50-80%w/w coconut oil and 2-25%w/w high-oleic sunflower oil;
(b) 3-10%w/w water; and
(c) 1-5%w/w yeast extract;
wherein the yeast extract naturally contains glutamic acid and derivatives thereof, which adds an umami flavour, juiciness and lingering taste.

Further preferably, there is provided a plant-based substitute for animal and/or dairy fat comprising:
(a) 74%w/w coconut oil and 18%w/w high-oleic sunflower oil;
(b) 5%w/w water; and
(c) 3%w/w yeast extract;
wherein the yeast extract naturally contains glutamic acid and derivatives thereof, which adds an umami flavour, juiciness and lingering taste.

Optionally, the plant-based substitute for animal and/or dairy fat has a pH of 4-6.

Preferably, the plant-based substitute for animal and/or dairy fat is edible.

Further preferably, the plant-based substitute for animal and/or dairy fat is a food product component.

According to second aspect of the present invention, there is provided a process of preparing a plant-based substitute for animal and/or dairy fat.

Optionally, there is provided a process of preparing a plant-based substitute for animal and/or dairy fat, the process comprising the steps of:
(a) providing coconut oil, sunflower oil and water;
(b) mixing the coconut oil, sunflower oil and water to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil and 3-10%w/w water;
(b) mixing the coconut oil, sunflower oil and water to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Preferably, the sunflower oil is high-oleic sunflower oil.

Preferably, there is provided a process of preparing a plant-based substitute for animal and/or dairy fat, the process comprising the steps of:
(a) providing 50-80%w/w coconut oil, 2-25%w/w high-oleic sunflower oil and 3-10%w/w water;
(b) mixing the coconut oil, high-oleic sunflower oil and water to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Optionally, the water is provided at a range of 30 to 80°C.

Preferably, the water is provided at a 55°C.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water to form an emulsion;
(c) filtering the emulsion;
(d) pasteurising the emulsion to form a pasteurised liquid mix; and
(e) crystallising the pasteurised liquid mix to produce plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Optionally, the coconut oil, sunflower oil and water are mixed at 400 to 600 RPM.

Optionally, the coconut oil, high-oleic sunflower oil and water are mixed at 400 to 600 RPM.

Optionally, the coconut oil, sunflower oil and water are mixed for 15 to 25 minutes.

Optionally, the coconut oil, high-oleic sunflower oil and water are mixed for 15 to 25 minutes.

Optionally, the coconut oil, sunflower oil and water are mixed at 400 to 600 RPM for 15 to 25 minutes.

Optionally, the coconut oil, high-oleic sunflower oil and water are mixed at 400 to 600 RPM for 15 to 25 minutes.

Optionally, the coconut oil, sunflower oil and water are mixed at 500 RPM for 20 minutes.

Preferably, the coconut oil, high-oleic sunflower oil and water are mixed at 500 RPM for 20 minutes.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 400 to 600 RPM for 15 to 25 mins to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 400 to 600 RPM for 15 to 25 mins to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 500 RPM for 20 mins to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 500 RPM for 20 mins to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Preferably, the emulsion is filtered using a mesh size of less than 500 microns.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 400 to 600 RPM for 15 to 25 mins to form an emulsion;
(c) filtering the emulsion using a mesh size of less than 500 microns;
(d) pasteurising the emulsion to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 400 to 600 RPM for 15 to 25 mins to form an emulsion;
(c) filtering the emulsion using a mesh size of less than 500 microns;
(d) pasteurising the emulsion to form a pasteurised liquid mix; and
(e) crystallising the pasteurised liquid mix to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 500 RPM for 20 mins to form an emulsion;
(c) filtering the emulsion using a mesh size of less than 500 microns;
(d) pasteurising the emulsion to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 500 RPM for 20 mins to form an emulsion;
(c) filtering the emulsion using a mesh size of less than 500 microns;
(d) pasteurising the emulsion to form a pasteurised liquid mix; and
(e) crystallising the pasteurised liquid mix to produce the plant-based substitute for animal and/or dairy fat.

Optionally, the emulsion is pasteurised at 80 to 85°C to form a pasteurised liquid mix.

Optionally, the emulsion is pasteurised for 3 to 5 seconds to form a pasteurised liquid mix.

Optionally, the emulsion is pasteurised at 80 to 85°C for 3 to 5 seconds to form a pasteurised liquid mix.

Preferably, the emulsion is pasteurised at 85°C for 3 seconds to form a pasteurised liquid mix.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 400 to 600 RPM for 15 to 25 mins to form an emulsion;
(c) filtering the emulsion using a mesh size of less than 500 microns;
(d) pasteurising the emulsion at 80 to 85°C for 3 to 5 secs to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 400 to 600 RPM for 15 to 25 mins to form an emulsion;
(c) filtering the emulsion using a mesh size of less than 500 microns;
(d) pasteurising the emulsion at 80 to 85°C for 3 to 5 secs to form a pasteurised liquid mix; and
(e) crystallising the pasteurised liquid mix to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix to produce the plant-based substitute for animal and/or dairy fat.

Optionally, the pasteurised liquid mix is crystallised by cooling in the range of 50 to 10°C.

Preferably, the pasteurised liquid mix is crystallised by cooling to 15°C.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix by cooling to the range of 50 to 10°C to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix by cooling to the range of 50 to 10°C to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to15°C to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to15°C to produce the sub plant-based substitute for animal and/or dairy fat.

Optionally, the Scraped Surface Heat Exchanger (SSHE) is used in a pressure range of 10-120 Bar.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix by cooling to the range of 50 to 10°C using a Scraped Surface Heat Exchanger (SSHE) in a pressure range of 10-120 Bar to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix by cooling to the range of 50 to 10°C using a Scraped Surface Heat Exchanger (SSHE) in a pressure range of 10-120 Bar to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to 15°C using a Scraped Surface Heat Exchanger (SSHE) in a pressure range of 10-120 Bar to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to 15°C using a Scraped Surface Heat Exchanger (SSHE) in a pressure range of 10-120 Bar to produce the plant-based substitute for animal and/or dairy fat.

Preferably, the Scraped Surface Heat Exchanger (SSHE) is used in a pressure range of 40-60 Bar.

Further preferably, the Scraped Surface Heat Exchanger (SSHE) is used at 60 Bar.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix by cooling to the range of 50 to 10°C using a Scraped Surface Heat Exchanger (SSHE) in a pressure range of 40-60 Bar to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix by cooling to the range of 50 to 10°C using a Scraped Surface Heat Exchanger (SSHE) in a pressure range of 40-60 Bar to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil; and 3-10%w/w water at 55°C;
(b) mixing the coconut oil, sunflower oil and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to 15°C using a Scraped Surface Heat Exchanger (SSHE) at a pressure of 60 Bar to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; and 3-10%w/w water at 55°C;
(b) mixing the coconut oil, high-oleic sunflower oil and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to 15°C using a Scraped Surface Heat Exchanger (SSHE) at a pressure of 60 Bar to produce the plant-based substitute for animal and/or dairy fat.

Optionally, there is provided a process of preparing a plant-based substitute for animal and/or dairy fat, the process comprising the steps of:
(a) providing 76%w/w coconut oil, 73%w/w sunflower oil; and 5%w/w water at 55°C;
(b) mixing the coconut oil, sunflower oil and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to 15°C using a Scraped Surface Heat Exchanger (SSHE) at a pressure of 60 Bar to produce the plant-based substitute for animal and/or dairy fat.

Preferably, there is provided a process of preparing a plant-based substitute for animal and/or dairy fat, the process comprising the steps of:
(a) providing 76%w/w coconut oil, 19%w/w high-oleic sunflower oil; and 5%w/w water at 55°C;
(b) mixing the coconut oil, high-oleic sunflower oil and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to 15°C using a Scraped Surface Heat Exchanger (SSHE) at a pressure of 60 Bar to produce the plant-based substitute for animal and/or dairy fat.

Optionally, the process of preparing a plant-based substitute for animal and/or dairy fat further comprises adding flavouring.

Optionally, the flavouring can be meat, dairy or vegetable flavour.

Optionally, the process of preparing a plant-based substitute for animal and/or dairy fat further comprises adding flavouring, which is oil-soluble.

Optionally, the process of preparing a plant-based substitute for animal and/or dairy fat further comprises adding flavouring, which is oil-soluble, to the coconut oil and high-oleic sunflower oil.

Optionally, there is provided a process of preparing a plant-based substitute for animal and/or dairy fat, the process comprising the steps of:
(a) providing coconut oil, sunflower oil flavouring and water;
(b) mixing the coconut oil, sunflower oil, flavouring and water to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring and 3-10%w/w water;
(b) mixing the coconut oil, sunflower oil, flavouring and water to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Preferably, the sunflower oil is high-oleic sunflower oil.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring and 3-10%w/w water;
(b) mixing the coconut oil, high-oleic sunflower oil, flavouring and water to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Optionally, the water is provided at a range of 30 to 80°C.

Preferably, the water is provided at a 55°C.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring; and 3-10%w/w water at 55°C;
(b) mixing the coconut oil, high-oleic sunflower oil, flavouring and water to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Optionally, the coconut oil, sunflower oil, flavouring and water are mixed at 400 to 600 RPM.

Optionally, the coconut oil, high-oleic sunflower oil, flavouring and water are mixed at 400 to 600 RPM.

Optionally, the coconut oil, sunflower oil, flavouring and water are mixed for 15 to 25 minutes.

Optionally, the coconut oil, high-oleic sunflower oil, flavouring and water are mixed for 15 to 25 minutes.

Optionally, the coconut oil, sunflower oil, flavouring and water are mixed at 400 to 600 RPM for 15 to 25 minutes.

Optionally, the coconut oil, high-oleic sunflower oil, flavouring and water are mixed at 400 to 600 RPM for 15 to 25 minutes.

Optionally, the coconut oil, sunflower oil, flavouring and water are mixed at 500 RPM for 20 minutes.

Preferably, the coconut oil, high-oleic sunflower oil, flavouring and water are mixed at 500 RPM for 20 minutes.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 400 to 600 RPM for 15 to 25 mins to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring; and 3-10%w/w water at 55°C;
(b) mixing the coconut oil, high-oleic sunflower oil, flavouring and water at 400 to 600 RPM for 15 to 25 mins to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 500 RPM for 20 mins to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring; and 3-10%w/w water at 55°C;
(b) mixing the coconut oil, high-oleic sunflower oil, flavouring and water at 500 RPM for 20 mins to form an emulsion;
(c) filtering the emulsion;
(d) pasteurising the emulsion to form a pasteurised liquid mix; and
(e) crystallising the pasteurised liquid mix to produce the plant-based substitute for animal and/or dairy fat.

Preferably, the emulsion is filtered using a mesh size of less than 500 microns.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 400 to 600 RPM for 15 to 25 mins to form an emulsion;
(c) filtering the emulsion using a mesh size of less than 500 microns;
(d) pasteurising the emulsion to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil. 1-5%w/w flavouring; and 3-10%w/w water at 55°C;
(b) mixing the coconut oil, high-oleic sunflower oil, flavouring and water at 400 to 600 RPM for 15 to 25 mins to form an emulsion;
(c) filtering the emulsion using a mesh size of less than 500 microns;
(d) pasteurising the emulsion to form a pasteurised liquid mix; and
(e) crystallising the pasteurised liquid mix to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 500 RPM for 20 mins to form an emulsion;
(c) filtering the emulsion using a mesh size of less than 500 microns;
(d) pasteurising the emulsion to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring; and 3-10%w/w water at 55°C;
(b) mixing the coconut oil, high-oleic sunflower oil, flavouring and water at 500 RPM for 20 mins to form an emulsion;
(c) filtering the emulsion using a mesh size of less than 500 microns;
(d) pasteurising the emulsion to form a pasteurised liquid mix; and
(e) crystallising the pasteurised liquid mix to produce the plant-based substitute for animal and/or dairy fat.

Optionally, the emulsion is pasteurised at 80 to 85°C to form a pasteurised liquid mix.

Optionally, the emulsion is pasteurised for 3 to 5 seconds to form a pasteurised liquid mix.

Optionally, the emulsion is pasteurised at 80 to 85°C for 3 to 5 seconds to form a pasteurised liquid mix.

Preferably, the emulsion is pasteurised at 85°C for 3 seconds to form a pasteurised liquid mix.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring; and 3-10%w/w water at 55°C;
(b) mixing the coconut oil, high-oleic sunflower oil, flavouring and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 400 to 600 RPM for 15 to 25 mins to form an emulsion;
(c) filtering the emulsion using a mesh size of less than 500 microns;
(d) pasteurising the emulsion at 80 to 85°C for 3 to 5 secs to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring; and 3-10%w/w water at 55°C;
(b) mixing the coconut oil, high-oleic sunflower oil, flavouring and water at 400 to 600 RPM for 15 to 25 mins to form an emulsion;
(c) filtering the emulsion using a mesh size of less than 500 microns;
(d) pasteurising the emulsion at 80 to 85°C for 3 to 5 secs to form a pasteurised liquid mix; and
(e) crystallising the pasteurised liquid mix to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring; and 3-10%w/w water at 55°C;
(b) mixing the coconut oil, high-oleic sunflower oil, flavouring and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix to produce the plant-based substitute for animal and/or dairy fat.

Optionally, the pasteurised liquid mix is crystallised by cooling in the range of 50 to 10°C.

Preferably, the pasteurised liquid mix is crystallised by cooling to 15°C.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix by cooling to the range of 50 to 10°C to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring; and 3-10%w/w water at 55°C;
(b) mixing the coconut oil, high-oleic sunflower oil, flavouring and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix by cooling to the range of 50 to 10°C to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to15°C to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring; and 3-10%w/w water at 55°C;
(b) mixing the coconut oil, high-oleic sunflower oil, flavouring and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to15°C to produce the plant-based substitute for animal and/or dairy fat.

Optionally, the Scraped Surface Heat Exchanger (SSHE) is used in a pressure range of 10-120 Bar.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix by cooling to the range of 50 to 10°C using a Scraped Surface Heat Exchanger (SSHE) in a pressure range of 10-120 Bar to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring; and 3-10%w/w water at 55°C;
(b) mixing the coconut oil, high-oleic sunflower oil, flavouring and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix by cooling to the range of 50 to 10°C using a Scraped Surface Heat Exchanger (SSHE) in a pressure range of 10-120 Bar to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to 15°C using a Scraped Surface Heat Exchanger (SSHE) in a pressure range of 10-120 Bar to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring; and 3-10%w/w water at 55°C;
(b) mixing the coconut oil, high-oleic sunflower oil, flavouring and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to 15°C using a Scraped Surface Heat Exchanger (SSHE) in a pressure range of 10-120 Bar to produce the plant-based substitute for animal and/or dairy fat.

Preferably, the Scraped Surface Heat Exchanger (SSHE) is used in a pressure range of 40-60 Bar.

Further preferably, the Scraped Surface Heat Exchanger (SSHE) is used at 60 Bar.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix by cooling to the range of 50 to 10°C using a Scraped Surface Heat Exchanger (SSHE) in a pressure range of 40-60 Bar to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil; 1-5%w/w flavouring and 3-10%w/w water at 55°C;
(b) mixing the coconut oil, high-oleic sunflower oil, flavouring and water at 400 to 600 RPM for 15 to 25 mins to form an emulsion;
(c) filtering the emulsion using a mesh size of less than 500 microns;
(d) pasteurising the emulsion at 80 to 85°C to form a pasteurised liquid mix; and
(e) crystallising the pasteurised liquid mix by cooling to the range of 50 to 10°C using a Scraped Surface Heat Exchanger (SSHE) in a pressure range of 40-60 Bar to produce the plant-based substitute for animal and/or dairy fat.

Optionally, there is provided a process of preparing a plant-based substitute for animal and/or dairy fat, the process comprising the steps of:
(a) providing 50-80%w/w coconut oil, 2-25%w/w sunflower oil, 1-5%w/w flavouring; and 3-10%w/w water at 55°C;
(b) mixing the coconut oil, sunflower oil, flavouring and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to 15°C using a Scraped Surface Heat Exchanger (SSHE) at a pressure of 60 Bar to produce the plant-based substitute for animal and/or dairy fat.

Preferably, there is provided a process of preparing a plant-based substitute for animal and/or dairy fat, the process comprising the steps of:
(a) providing 50-80%w/w coconut oil, 2-25%w/w high-oleic sunflower oil, 1-5%w/w flavouring; and 3-10%w/w water at 55°C;
(b) mixing the coconut oil, high-oleic sunflower oil, flavouring and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to 15°C using a Scraped Surface Heat Exchanger (SSHE) at a pressure of 60 Bar to produce the plant-based substitute for animal and/or dairy fat.

Optionally, there is provided a process of preparing a plant-based substitute for animal and/or dairy fat, the process comprising the steps of:
(a) providing 74%w/w coconut oil, 18%w/w sunflower oil, 3w/w flavouring; and 5%w/w water at 55°C;
(b) mixing the coconut oil, sunflower oil, flavouring and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to 15°C using a Scraped Surface Heat Exchanger (SSHE) at a pressure of 60 Bar to produce the plant-based substitute for animal and/or dairy fat.

Preferably, there is provided a process of preparing a plant-based substitute for animal and/or dairy fat, the process comprising the steps of:
(a) providing 74%w/w coconut oil, 18%w/w high-oleic sunflower oil, 3%w/w flavouring; and 5%w/w water at 55°C;
(b) mixing the coconut oil, high-oleic sunflower oil and water at 500 RPM for 20 mins to form an emulsion;
(c) filtering the emulsion using a mesh size of less than 500 microns;
(d) pasteurising the emulsion at 85°C for 3 seconds to form a pasteurised liquid mix; and
(e) crystallising the pasteurised liquid mix by cooling to 15°C using a Scraped Surface Heat Exchanger (SSHE) at a pressure of 60 Bar to produce the plant-based substitute for animal and/or dairy fat.

Optionally, the process of preparing a plant-based substitute for animal and/or dairy fat further comprises adding flavouring to the water.

Optionally, the process of preparing a plant-based substitute for animal and/or dairy fat further comprises adding flavouring to the water, which is water-soluble.

Optionally, the flavouring added to the water can be beef, lard, chicken, lamb, or dairy flavour.

Optionally, the flavouring added to the water can be yeast extract.

Optionally, the flavouring added to the water can be yeast extract, wherein the yeast extract naturally contains glutamic acid and derivatives thereof.

Optionally, the flavouring added to the water can be yeast extract, wherein the yeast extract naturally contains glutamic acid and derivatives thereof, which adds an umami flavour, juiciness and lingering taste.

According to a third aspect of the present invention, there is provided use of the plant-based substitute for animal and/or dairy fat in plant-based, fish-based, dairy-based and/or meat-based food products.

Optionally, the plant-based food product can be a vegetable burger, vegetable patty, vegetable schnitzels, vegetable ball, vegetable sausage; or similar.

Optionally, the fish-based food product can be surimi, fish nugget; or similar.

Optionally, the dairy-based food product can be processed cheese, table spreads, ice cream; or similar.

Optionally, the meat-based food product can be pork, beef, poultry, game or lamb.

Optionally, a portion of the animal fat of the plant-based, fish-based, dairy-based and/or meat-based food products is replaced by the plant-based substitute for animal and/or dairy fat.

Optionally, all of the animal fat of the plant-based, fish-based, dairy-based and/or meat-based food products is replaced by the plant-based substitute for animal and/or dairy fat.

Preferably, the plant-based substitute for animal and/or dairy fat is provided at the inclusion level of 1-3% w/w of the plant-based, fish-based, dairy-based and/or meat-based food products.

Optionally, the plant-based, fish-based, dairy-based and/or meat-based food products comprising the plant-based substitute for animal and/or dairy fat have in particular a better visual appearance compared to equivalent plant-based, fish-based, dairy-based and/or meat-based food products in which the animal fat is not substituted.

Optionally, the plant-based, fish-based, dairy-based and/or meat-based food product comprising the plant-based substitute for animal and/or dairy fat have in particular a better taste profile compared to equivalent plant-based, fish-based, dairy-based and/or meat-based food products in which the animal fat is not substituted.

Optionally, the plant-based, fish-based, dairy-based and/or meat-based food products comprising the plant-based substitute for animal and/or dairy fat have in particular a better visual appearance and better taste profile compared to equivalent plant-based, fish-based, dairy-based and/or meat-based food products in which the animal fat is not substituted.

Optionally, the plant-based, fish-based, dairy-based and/or meat-based food products are free from dairy, preservatives, E numbers, colours, palm oil and hydrogenated oils.

Optionally, the plant-based, fish-based, dairy-based and/or meat-based food product is packaged and stored.

Optionally, the plant-based, fish-based, dairy-based and/or meat-based food products is packaged and stored in a freezer.

Optionally, the plant-based, fish-based, dairy-based and/or meat-based food product is stored in a freezer between -8 and -20°C.

According to a fourth aspect of the present invention, there is provided a method of manufacturing the plant-based substitute for animal and/or dairy fat in plant-based, fish-based, dairy-based and/or meat-based food products.

Optionally, there is provided a method of manufacturing the plant-based substitute for animal and/or dairy fat in plant-based, fish-based, dairy-based and/or meat-based food products comprising the steps of:
(a) preparing the plant-based or meat-based food product;
(b) mixing the plant-based, fish-based, dairy-based and/or meat-based food product with the plant-based substitute for animal and/or dairy fat; and
(c) cooking the plant-based or meat-based food product.

Optionally, the preparing step (a) comprises grinding, chopping and/or cutting the plant-based, fish-based, dairy-based and/or meat-based food product.

Optionally or alternatively, the plant-based substitute for animal and/or dairy fat can be softened and emulsified into the plant-based, fish-based, dairy-based and/or meat-based food products or a combination thereof.

Optionally, the plant-based food product can be a vegetable burger, vegetable patty, vegetable schnitzels, vegetable ball, vegetable sausage; or similar.

Optionally, the fish-based food product can be surimi, fish nugget; or similar.

Optionally, the dairy-based food product can be processed cheese, table spreads, ice cream; or similar.

Optionally, the meat-based food product can be pork, beef, poultry, game or lamb.

Optionally, the mixing step (b) comprises cold mixing the plant-based or meat-based food product with the plant-based substitute for animal and/or dairy fat.

Optionally, the mixing step (b) comprises cold mixing the plant-based or meat-based food product with the plant-based substitute for animal and/or dairy fat, wherein the plant-based substitute for animal and/or dairy fat is provided at the inclusion level of 1-3%w/w of plant-based or meat-based food product.

### Brief Description of the Drawings

The invention will be described with reference to the accompanying drawings in which:

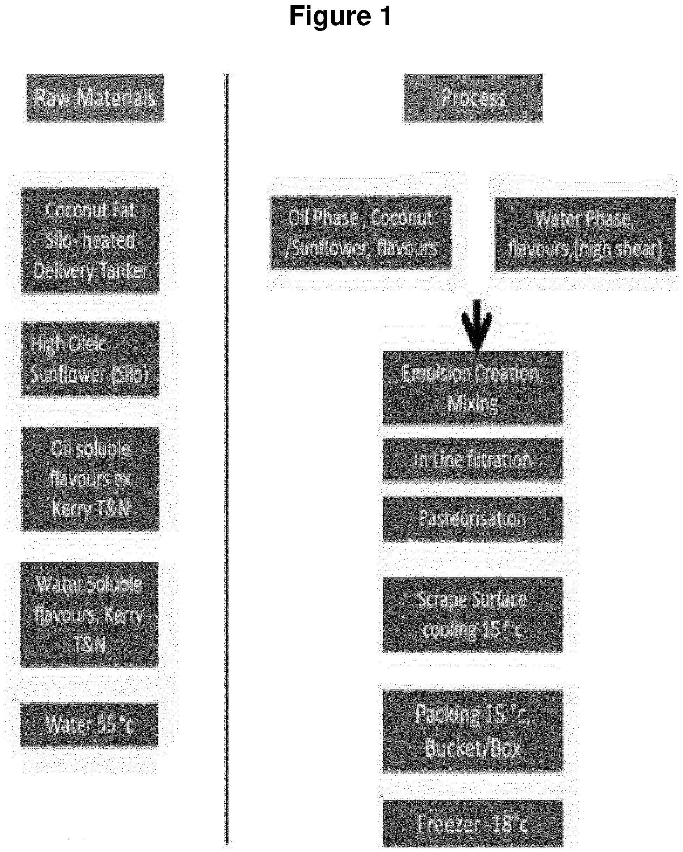

**Figure 1** illustrates a process flow diagram for production of the invention.

### Examples

The invention will now be described with reference to the following non-limiting examples.

### Example 1

### Compositions of the invention

The invented plant-based substitute for animal and/or dairy fat is vegan and clean labelling free from dairy, preservatives, E numbers, colours, palm oil, and hydrogenated oils.

The examples discussed is in relation to the beef flavour version of the invention; however, any flavouring may be used.

**Table 1. Composition of the plant-based substitute for animal and/or dairy fat without flavouring.**

| **Ingredient** | ***% w*/*w (Range)*** | ***% w*/*w (Specific)*** |
|---|---|---|
| Water | 3-10 | 5 |
| Coconut oil | 50-80 | 76 |
| Sunflower oil | 2-25 | 19 |
| **Total** | | **100** |

**Table 2. Composition of the plant-based substitute for animal and/or dairy fat with flavouring.**

| **Ingredient** | **% *w*/*w (Range)*** | **% *w*/*w (Specific)*** |
|---|---|---|
| Water | 3-10 | 5 |
| Coconut oil | 50-80 | 74 |
| Sunflower oil | 2-25 | 18 |
| Flavouring (Kerry Group) | 1-5 | 3 |
| **Total** | | **100** |

### Example 2

### Preparation of the liquid mix and manufacturing procedure

Another aspect of the present invention relates to the method and sequence of the ingredients (Table. 1 and 2), mixing and the manufacturing process. The developed manufacturing process for the production of the invention is illustrated in Figure 1.

Initially, the melted coconut oil, high-oleic sunflower oil, and optionally the flavouring (e.g., beef, lard, chicken, lamb, dairy, vegetable or fish flavour; Kerry Group) are added to the emulsion tank.

Then the water phase at 55 °C is mixed with complementary water soluble functional taste elements (flavours; Kerry Group) using a high-shear mixer is slowly added into the emulsion tank.

The emulsion created by mixing of the raw materials at speed of 500 RPM for 20 mins.

Then, the obtained emulsion is passed through an in line-filtration system and pasteurised at 85 °C for 3 seconds.

Afterwards, the pasteurised liquid mix is allowed to crystallise (solidify) by cooling to 15 °C using a Scraped Surface Heat Exchanger (SSHE) and packed into bucket/box (Figure 1).

Since both coconut and high-oleic sunflower oils have a high smoke point near to animal fat (e.g. beef tallow), the invented plant-based substitute for animal and/or dairy fat is suitable for the application at a high temperature of the cooking or frying.

### Example 3

### Physiochemical properties

The invented plant-based substitute for animal and/or dairy fat has a slightly acidic pH of 4-6. This is achieved through the fermented ingredients of the flavour included.

NMR analysis shows this product has a melt profile such that at N10 there is a 57.16 solid fat content, and at N30 there is <0.05 solid fat content.

The melt profile is designed to perform in the customer's product to give a juicy fatty texture.

The nutritional information of the example used in this study is illustrated in Table 3.

**Table 3. Nutritionals of the plant-based substitute for animal and/or dairy fat.**

| **Ingredient** | **Amount (g/100g** |
|---|---|
| **Nutrient** | 0.3 |
| **Protein** | 89.3 |
| **Fat** | 62.84 |
| **Saturated fatty acids** | 1.0 |
| **Carbohydrate** | 0.85 |
| **Salt** | 0.341 |
| **Sodium** | 805 |
| **Energy (kcal)** | 0.3 |

### Example 4

### Sensory results

Sensory analysis was conducted on the invented product compared to a direct flavour system (i.e. beef tallow) in a plant based burger.

The untrained panel (n = 30), completed a self-directed questionnaire which asked questions relating to the samples liking in terms of the overall product via a 10-point hedonic scale (dislike extremely to like extremely).

The sensory analysis results indicated that the burger made with the invented plant-based substitute for animal and/or dairy fat was liked significantly more than the burger produced with the direct flavour system. The sample prepared using the invented plant-based substitute for animal and/or dairy fat was found to have a better delivery of overall flavour and meaty flavour, which is likely to have increased the overall liking of the burger.

Results show that the invented plant-based substitute for animal and/or dairy fat sample was closer to meat with a juicy, succulent mouth feel.

The direct flavour system was found to be bland with unpleasant off notes.

### Example 5

### Functionalities in plant-based applications

The current plant- and dairy-based oils used as the alternatives to beef tallow have several disadvantages e.g. in application, they can't deliver the succulence, mouthfeel, lingering, juiciness and fatty beef flavour to finished product similar to the beef tallow. Furthermore, they may contain palm oil and dairy products, thereby, not suitable for the consumers with a restricted diet e.g. vegan.

The invented plant-based substitute for animal and/or dairy fat has several advantages as described below.

In plant-based applications e.g. a vegan plant-based burger with the plant-based substitute for animal and/or dairy fat at the inclusion level of 1% to 3% (w/w) delivers succulence, mouthfeel, lingering, juiciness and a fatty mouth coating quality similar to a cooked meat product.

In addition, the plant-based substitute for animal and/or dairy fat delivers a fatty visual both when raw or cooked and adds a fatty flavour to finished product making it significantly closer to a true meat-based product.

The application of the plant-based substitute for animal and/or dairy fat versus beef tallow in a plant-based product (e.g., a vegan plant-based burger mix) is exemplified below.

For example, (a) 8.5% (w/w) fat plant-based burger containing 8.5% (w/w) Coconut Oil (Control); (b) 8.5% (w/w) fat plant-based burger containing 6.5% Coconut Oil (w/w) and 2.5% (w/w) Beef Tallow; and (c) 8.5% (w/w) fat plant-based burger containing 6.5% Coconut Oil (w/w) and 2.5% (w/w) of the invented plant-based substitute for animal and/or dairy fat.

The results indicated that the application of invented plant-based substitute for animal and/or dairy fat in the plant-based burger mix significantly increased the visual shine and enhanced the product (beef) flavour when compared to those achieved when beef tallow was applied.

In addition, as the plant-based products often lack the fatty notes and succulence of their meat predecessors, incorporating the invented plant-based substitute for animal and/or dairy fat into the plant-based product can deliver a step change.

Thereby, the invented plant-based substitute for animal and/or dairy fat solves the gap in market to deliver the beef flavour and succulence to current vegan burger, patties or similar products.

### Example 6

### Functionalities in meat-based applications

In meat-based applications e.g. a beef burger with the plant-based substitute for animal and/or dairy fat at the inclusion level of 1 - 3% (w/w) (i.e., 85% (w/w) lean meat, 12% (w/w) fat naturally present in the meat, and 3% (w/w) of the invented plant-based substitute for animal and/or dairy fat, as opposed to 20% fat naturally present in the meat in a standard beef burger (i.e., 80% (w/w) lean meat and 20% (w/w) fat naturally present in the meat) delivers the same succulence, mouth-coating, and fatty flavour, and also delivering a significant reduction of the fat level of the beef burger without compromising the product taste and quality that is also more healthy.

The application of the invented plant-based substitute for animal and/or dairy fat in a meat-based product (e.g. a beef burger mix) is exemplified below.

Foe example, (a) 20% (w/w) fat beef burger containing 20% (w/w) fat naturally present in the meat (Control); (b) 15% (w/w) fat beef burger containing 12% (w/w) fat naturally present in the meat and 3% (w/w) beef tallow; and (c) 15% (w/w) fat beef burger containing 12% (w/w) fat naturally present in the meat and 3% (w/w) of the invented plant-based substitute for animal and/or dairy fat.

The purpose of the application trial was to understand the effect of the invented plant-based substitute for animal and/or dairy fat application as a fat reduction technology solution where a control beef burger mix (i.e., 80:20 lean meat-total fat ratio) is compared to the beef burger mix prepared using beef tallow and/or the invented plant-based substitute for animal and/or dairy fat (i.e., 85:15 lean meat-total fat ratio).

Both beef tallow or the invented plant-based substitute for animal and/or dairy fat at a same inclusion level of 3% (w/w) delivers a shiny visual surface to the burger (as the fat completely being bound into the product), increasing the succulence, and improving the product flavour.

The application results indicated that the invented plant-based substitute for animal and/or dairy fat is a suitable plant-based vegan substitute for beef tallow that, in application, delivers the same flavour, taste, succulence, and functionality as beef tallow and can also be used as a fat reduction technology solution in meat-based products.

### Example 7

### Conclusion

The invented plant-based substitute for animal and/or dairy fat's unique taste is achieved through the combinations of ingredients as described herein, and, as a result, the process applied provides a unique and consistent flavour/functionality.

The invented plant-based substitute for animal and/or dairy fat is vegan and clean labelling free from dairy, preservatives, E numbers, colours, palm oil, and hydrogenated oils. The examples discussed in this study is in relation to the beef flavour version, but the application of the invented plant-based substitute for animal and/or dairy fat is not limited to beef and can be used for the substitution of other animal/dairy fats (e.g., lard, chicken, lamb, or dairy) used in different applications by altering the flavouring used in formulation.

The method of the encapsulation process used in this invention offers a unique animal/dairy flavour protection and releases that in application delivering the similar attributes (e.g. flavour and taste) to animal/dairy fat.

In application, the invented plant-based substitute for animal and/or dairy fat can be emulsified into the product (e.g. vegan or beef burger) through processing; delivering similar effects to beef tallow (e.g., flavour, taste, mouth-coating, succulence, and hardness).

In plant-based applications e.g. vegan burger at the inclusion level of 1 - 1.5% (*w*/*w*) delivers succulence and a fatty mouth coating quality similar to a cooked meat product. Also, it delivers a fatty visual both when raw or cooked and adds a fatty flavour to finished product making it significantly closer to a true meat product. Thereby, the invented plant-based substitute for animal and/or dairy fat solves the gap in market to deliver the animal/dairy flavour and succulence to current vegan patties or similar products.

In meat-based applications e.g. beef burger at the inclusion level of the 1 - 1.5% (*w*/*w*) can be used in combination with beef tallow at a lower inclusion level e.g. 5% (*w*/*w*) (i.e., 94% meat *w*/*w* & 1% *w*/*w* of the invented plant-based substitute for animal and/or dairy fat and 5% *w*/*w* beef tallow) as opposed to 20% beef tallow used in a standard beef burger (i.e., 80% *w*/*w* meat & 20% *w*/*w* Beef Tallow) to deliver the same succulence, mouth-coating, and fatty flavour, thus, delivering a significant reduction of the fat level of the beef burger without compromising the product taste and quality that is also significantly more healthy.

This invention solves the gap in market to deliver the animal/dairy flavour and succulence to current vegan patties or similar products. The other unique advantage of the invented product is its application to reduce the fat content of meat and vegan products (e.g., burgers and patties) without compromising the product taste and overall sensory attributes. The invented plant-based vegan animal/dairy fat substitute is suitable for domestic and industrial (e.g. Food Service, Retailers, etc.) cooking, baking, and frying applications.

## Claims

1. A plant-based substitute for animal and/or dairy fat comprising:
(a) coconut oil and sunflower oil; and
(b) water.

2. The plant-based substitute for animal and/or dairy fat according to Claim 1, wherein the coconut oil is provided at 50%-80%w/w, sunflower oil is provided at 2-25%w/w and water is provided at 3-10%w/w.

3. The plant-based substitute for animal and/or dairy fat according to Claim 1 or Claim 2, wherein the plant-based substitute for animal and/or dairy fat further comprises flavouring.

4. The plant-based substitute for animal and/or dairy fat according to Claim 3, wherein the plant-based substitute for animal and/or dairy fat further comprises 1-5%w/w flavouring.

5. A process of preparing a plant-based substitute for animal and/or dairy fat, the process comprising the steps of:
(a) providing coconut oil, sunflower oil and water;
(b) mixing the coconut oil, sunflower oil and water to form an emulsion;
(c) filtering the emulsion;
(d) pasteurising the emulsion to form a pasteurised liquid mix; and
(e) crystallising the pasteurised liquid mixto produce the plant-based substitute for animal and/or dairy fat.

6. The process according to Claim 5, wherein the coconut oil is provided at 50%-80%w/w, sunflower oil is provided at 2-25%w/w and water is provided at 3-10%w/w.

7. The process according to Claims 5 or 6, wherein water is provided at a 55°C.

8. The process according to any one of Claims 5-7, wherein the coconut oil, sunflower oil and water are mixed at 400 to 600 RPM for 15 to 25 minutes.

9. The process according to any one of Claims 5-8, wherein the emulsion is filtered using a mesh size of less than 500 microns.

10. The process according to any one of Claims 5-9, wherein the emulsion is pasteurised at 80 to 85°C for 3 to 5 seconds to form a pasteurised liquid mix.

11. The process according to any one of Claims 5-10, wherein the pasteurised liquid mix is crystallised by cooling in the range of 50 to 10°C.

12. The process according to any one of Claims 5-11, wherein the process further comprises adding flavouring.

13. Use of the plant-based substitute for animal and/or dairy fat according to any one of Claims 1-4 in plant-based, fish-based, dairy-based and/or meat-based food products.

14. The use according to Claim 13, wherein the plant-based substitute for animal and/or dairy fat is provided at the inclusion level of 1-3%w/w of the plant-based, fish-based, dairy-based and/or meat-based food products.

15. A method of manufacturing the plant-based substitute for animal and/or dairy fat in plant-based, fish-based, dairy-based and/or meat-based food products comprising the steps of:
(a) preparing the plant-based or meat-based food product;
(b) mixing the plant-based, fish-based, dairy-based and/or meat-based food product with the plant-based substitute for animal and/or dairy fat according to any one of Claims 1-4; and
(c) cooking the plant-based or meat-based food product.
